# DEMANDE DE BREVET EUROPEEN

(11) **EP 4 328 827 A1**
(43) Date de publication de la demande: **28.02.2024**
(21) Numéro de dépôt: 23189321.5
(22) Date de dépôt: 02.08.2023
(51) Int. Cl.: G06Q 10/0833, G06Q 10/0835, G06Q 50/28

(54) **SYSTÈME ET PROCÉDÉ DE COLISAGE DE BOÎTES RÉUTILISABLES AUTO-CONFIGURABLES**

(30) Priorité: 22.08.2022 FR 2208442
(71) Demandeur: PA.COTTE SA, 1009 Pully (CH)
(72) Inventeur: COLIN, Jérôme, 49240 Avrillé (FR); COTTE, Pierre-Alain, 92224 Amberg (DE)
(74) Mandataire: reuteler & cie SA

(57) **Abrégé**

L'invention concerne un système (1) de colisage comprenant un serveur distant (2), et une pluralité de boîtes (3) réutilisables, chaque boîte (3) comprenant :
- une unité informatique (31) embarquée paramétrée pour adopter une configuration d'économie d'énergie, ou une configuration d'utilisation ;
- des moyens de communication (32) aptes à communiquer avec le serveur distant (2) ;
- un écran externe (33) positionné sur une face externe de la boîte (3) ;
- au moins un capteur (34) ;
dans lequel, pour chaque boîte (3) avec l'unité informatique (31) dans une configuration d'économie d'énergie, l'unité informatique (31) est paramétrée pour détecter par ledit ou lesdits capteurs (34) de la boîte (3) la réalisation d'une action prédéterminée sur la boîte (3), puis déclencher une routine d'activation de la boîte (3).

## Description

Le domaine de l'invention est celui de la logistique.

Plus précisément, l'invention concerne un système et un procédé de colisage mettant en oeuvre des boîtes réutilisables.

Les services de livraison permettent d'expédier des objets à des destinataires identifiés par leurs nom et adresse de livraison. Ces informations constituent une partie de données de colisage.

Le domaine de l'invention a vu récemment l'apparition de boîtes réutilisables connectées.

A la différence de boîtes en carton présentant une durée de vie particulièrement courte, les boîtes réutilisables sont conçues pour présenter une longévité importante, et permettre, par exemple, d'être encore fonctionnelles après plus d'une centaine d'utilisations de la boîte lors de livraisons.

Une telle boîte est, par exemple, décrite dans le document de brevet publié sous le numéro CN113205621A.

Selon la solution décrite par ce document, une boîte de livraison intègre dans sa structure des équipements ou composants électroniques permettant à la boîte de communiquer avec un serveur distant et le contrôle et la réalisation de l'ouverture et de la fermeture par un opérateur habilité.

Ce type de boîtes présente un avantage écologique particulièrement important mais permet également de simplifier des opérations de colisage.

Néanmoins, l'usage professionnel de ce type de boîte révèle que la configuration d'une de ces boîtes pour un envoi peut parfois être compliquée et requérir des actions peu utiles des opérateurs.

Par exemple, dans le document de brevet précité, un opérateur doit d'abord renseigner des informations de colisage, par exemple sur son téléphone, et scanner un code QR apparaissant sur la boîte, tout en validant un paiement.

Les informations de colisage sont alors échangées avec un serveur distant par la boîte, puis la boîte autorise l'opérateur à l'ouvrir pour qu'il y dépose un objet et des informations de colisage sont affichées sur un écran externe de la boîte.

Dans une démarche d'amélioration constante, la facilité d'une telle manipulation peut être considérée comme insatisfaisante et il est ainsi recherché à améliorer une telle opération de colisage.

Il peut être également remarqué que dans un environnement professionnel, pour des opérateurs devant envoyer une multitude d'objets par jour avec de telles boîtes, le recours à ce genre de procédure de colisage peut être rédhibitoire.

L'invention a notamment pour objectif de pallier cet inconvénient de l'art antérieur.

Plus précisément, l'invention a pour objectif de proposer un système et un procédé de colisage de boîtes réutilisables qui présentent une facilité de configuration des données de colisage à mettre en oeuvre par la boîte.

L'invention a également pour objectif de fournir un tel système et un tel procédé qui viabilise l'usage de boîtes réutilisables pour des opérateurs professionnels.

Ces objectifs, ainsi que d'autres qui apparaitront par la suite, sont atteints grâce à l'invention qui a pour objet un système de colisage comprenant un serveur distant, et une pluralité de boîtes réutilisables, chaque boîte comprenant :
- une unité informatique embarquée paramétrée pour adopter une configuration d'économie d'énergie, ou une configuration d'utilisation ;
- des moyens de communication aptes à communiquer avec le serveur distant ;
- un écran externe positionné sur une face externe de la boîte ;
- au moins un capteur ;
caractérisé en ce que, pour chaque boîte avec l'unité informatique dans une configuration d'économie d'énergie, l'unité informatique est paramétrée pour détecter par ledit ou lesdits capteurs de la boîte la réalisation d'une action prédéterminée sur la boîte, puis déclencher une routine d'activation comprenant :
- une étape de passage de l'unité informatique de sa configuration d'économie d'énergie à sa configuration d'utilisation ;
- une étape de téléchargement par l'unité informatique, des données de colisage, dont au moins une adresse de destination de la boîte, depuis le serveur distant, jusqu'à l'unité informatique, par le biais des moyens de communication;
- une étape d'affichage sur l'écran externe d'au moins une partie des données de colisage.

Grâce à un système selon l'invention, un opérateur qui se saisit d'une boîte réutilisable du système peut déclencher, par une action prédéterminée dont il a connaissance, l'activation et la configuration de la boîte, c'est-à-dire son réveil et le téléchargement de données de colisage dont au moins une partie seront affichées sur l'écran externe de la boîte.

La configuration de la boîte réutilisable est ainsi minimisée et particulièrement simple à mettre en oeuvre par un opérateur et permet d'éviter des erreurs d'utilisation.

En effet, un opérateur n'a ainsi pas nécessairement besoin de remplir des données de colisage en saisissant une boîte prédéterminée. En saisissant une boîte dans une configuration d'économie d'énergie et en réalisant une routine d'activation, la configuration de la boîte sélectionnée se réalise automatiquement.

Un tel système est ainsi particulièrement avantageux pour un opérateur professionnel qui n'a alors pas à réaliser d'opérations de renseignements de données de colisage, ou en minimisant cette opération.

Avantageusement, la routine d'activation comprend également une étape d'information du serveur distant du passage de l'unité informatique à sa configuration d'utilisation, et de stockage de cette information par le serveur distant

Selon un mode de réalisation préféré, le système comprend des moyens d'identification d'un opérateur par une unité informatique d'une boîte.

L'identification d'un opérateur améliore également la facilité d'usage, la sécurisation du système et d'éviter des erreurs de manipulation.

Par exemple, l'identification d'un opérateur permet de valider ou d'invalider la capacité de l'opérateur à réaliser la routine d'activation. Un opérateur inconnu du système peut ainsi ne pas être autorisé à permettre le réveil de l'unité informatique de la boîte réutilisable.

Les moyens d'identification d'un opérateur peuvent également permettre une configuration plus spécifique de l'unité informatique de la boîte.

Préférentiellement, les moyens d'identification comportent un élément d'identification distinct des boîtes et destiné à être porté par un opérateur, chaque boîte comportant un capteur conçu pour détecter l'élément d'identification.

L'opération d'identification est alors facilitée par la présence d'un élément d'identification pouvant être aisément détecté par un capteur ad hoc de la boîte sélectionnée par l'opérateur.

Par exemple, un tel élément d'identification peut être un dispositif électronique qui serait configuré pour permettre l'émission d'un signal d'identification.

Selon une variante envisageable, les moyens d'identification comportent, pour chaque boîte, un capteur biométrique.

De tels moyens d'identification sécurisent le procédé d'identification en évitant l'usage d'un élément d'identification quelconque par un opérateur non habilité à l'utiliser.

Selon une autre variante envisageable, les moyens d'identification sont du type « sans-fil » et sont paramétrés pour établir une identification d'un opérateur à proximité immédiate d'une des boîtes.

De tels moyens d'identification du type sans-fil offrent une facilité d'usage particulièrement importante du système en permettant une identification de l'opérateur réalisant une routine d'activation de l'unité électronique d'une boîte en n'imposant pas à l'opérateur de réaliser une manipulation physique spécifique directement sur la boîte pour être identifiée par la boîte.

Le simple fait de s'approcher d'une boîte dont la routine d'activation est déclenchée, ou d'être l'opérateur le plus proche de cette boîte permet l'identification automatique de l'opérateur et ainsi des données de colisage.

Les moyens d'identification peuvent ainsi comprendre un dispositif destiné à être porté, et/ou saisi et apposé sur la boîte par l'opérateur, tel qu'une carte électronique, un bracelet électronique porté par l'opérateur, ou encore un téléphone portable de l'opérateur.

De tels dispositifs peuvent par exemple mettre en oeuvre une puce NFC ou une puce RFID ou des dispositifs connectés par exemple en Bluetooth, les moyens d'identification comprenant alors un capteur ad hoc porté par la boîte.

Selon une solution préférée, le serveur distant est paramétré pour attribuer à un opérateur un colisage associé à des données de colisage, et la routine d'activation comprend également une étape d'identification, par les moyens d'identification, de l'opérateur réalisant une action prédéterminée sur la boîte, l'étape de téléchargement des données de colisage consistant à télécharger les données de colisage relatives au colisage attribué à l'opérateur.

La réalisation d'un colisage est particulièrement simplifiée.

En effet, le serveur distant attribue à un opérateur de colisage une opération de colisage. En rapport avec cette opération de colisage, le serveur distant stocke et prépare pour téléchargement les données de colisage relatives à ce colisage.

Par la suite, dès que cet opérateur réalise une routine d'activation sur une boîte, et est identifiée par la boîte, alors il se déclenche le téléchargement spécifique des données du colisage attribué à l'opérateur.

Dans un cadre professionnel, une telle simplification du procédé de colisage est avantageuse.

Préférentiellement, pour chaque boîte, le ou au moins une partie des capteurs est sélectionné parmi :
- un accéléromètre ;
- un détecteur d'ouverture ;
- un capteur de poids.

De tels capteurs permettent que l'action prédéterminée destinée à être détectée pour déclencher une routine d'activation consiste, par exemple, en :
- un déplacement de la boîte par l'opérateur (par exemple, le fait que la boîte soit secouée ou soit renversée sur un côté prédéterminé) ;
- l'ouverture de la boîte ;
- le positionnement d'un objet à l'intérieur de la boîte qui, grâce au capteur de poids, serait détecté.

Ces différentes actions prédéterminées sont classiques dans un procédé de colisage, et leur capacité à activer la boîte et à entraîner le téléchargement des données du colisage simplifie grandement le travail d'un opérateur de colisage.

Selon un mode de réalisation avantageux, le système comprend des moyens d'information d'opérateurs de colisage destinés à informer les opérateurs qu'un colis doit être envoyé, et le serveur distant est paramétré pour envoyer une consigne de préparation d'un colis à un opérateur par le biais des moyens d'information, lors de la réception de données de colisage.

De cette manière, dès que le serveur distant reçoit une commande, et qu'il détermine qu'un colis doit être envoyé, alors il peut informer un opérateur à cet effet. L'opérateur informé doit alors simplement saisir une boîte inactive parmi d'autres pour réaliser le colisage, puis réaliser la routine d'activation.

Ces moyens d'information d'opérateurs de colisage peuvent également être utilisés pour informer l'opérateur sur le nombre et la nature du ou des objets qui doivent être mis en colis.

Avantageusement, le serveur distant comprend des moyens de réception d'ordres de colisage, et est paramétré pour préparer, pour leur téléchargement, des données colisage relatives à chaque ordre de colisage.

De cette manière, le système est particulièrement adapté à un contexte professionnel et simplifie l'obtention des données de colisage qui devront être téléchargées.

L'invention a également pour objet un procédé de colisage comprenant :
- une pluralité de boîtes réutilisables comprenant chacune un écran externe, des capteurs, et une unité informatique embarquée paramétrée pour adopter une configuration d'économie d'énergie, ou une configuration d'utilisation ;
- une étape de sélection par un opérateur d'une boîte parmi une pluralité de boîtes dont les unités informatiques adoptent la configuration d'économie d'énergie ;
- une étape de réalisation d'une action prédéterminée sur la boîte sélectionnée ;
- une étape de détection par l'unité informatique de l'action prédéterminée captée par le ou les capteurs de la boîte ;
- une étape de déclenchement d'une routine d'activation par l'unité informatique de la boîte sélectionnée, la routine d'activation comprenant :
- une étape de passage de l'unité informatique de sa configuration d'économie d'énergie à sa configuration d'utilisation ;
- une étape de téléchargement des données de colisage, dont au moins une adresse de destination de la boîte, depuis un serveur distant, jusqu'à l'unité informatique ;
- une étape d'affichage sur l'écran externe au moins une partie des données de colisage.

Le procédé selon l'invention présente les mêmes avantages que le système précédent.

Ce procédé est destiné à être plus spécifiquement mis en oeuvre par le système précédemment décrit.

Le procédé comprend également, postérieurement à l'étape de passage de l'unité informatique de sa configuration d'économie d'énergie à sa configuration d'utilisation, une étape d'information du serveur distant du passage de l'unité informatique à sa configuration d'utilisation, et de stockage de cette information par le serveur distant.

D'autres caractéristiques et avantages de l'invention apparaîtront plus clairement à la lecture de la description suivante de différents modes de réalisation préférentiels de l'invention, donnés à titre d'exemples illustratifs et non limitatifs, et du dessin annexé :

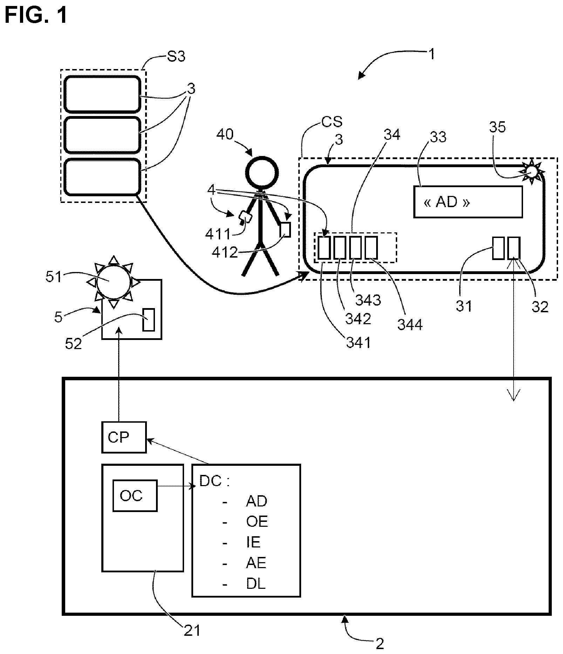

- [Fig. 1] la figure 1 est une représentation schématique d'un système de colisage selon l'invention.

En référence à la figure 1, un système 1 de colisage selon l'invention est décrit ci-après.

Le système 1 de colisage comprend :
- un serveur distant 2 ;
- une pluralité de boîtes 3 réutilisables.

Un opérateur 40 de colisage est également représenté. Cet opérateur 40 est destiné réaliser une opération de colisage à l'aide des boîtes 3 réutilisables.

Chaque boîte 3 comprend :
- une unité informatique 31 embarquée ;
- des moyens de communication 32, notamment aptes à communiquer avec le serveur distant 2 ;
- un écran externe 33 positionné sur une face externe de la boîte 3 ;
- au moins un capteur 34.

Chaque boîte 3 comporte également un organe d'avertissement 35 qui peut être piloté par l'unité informatique 31 embarquée de la boîte 3.

Chaque boîte 3 réutilisable est constituée classiquement d'un contenant et d'un couvercle monté mobile sur le contenant entre une position de fermeture et une position d'ouverture permettant un accès au volume interne délimité par le contenant et, éventuellement, à l'objet que la boîte 3 réutilisable contient.

Le couvercle est en l'occurrence monté pivotant sur le contenant.

Alternativement, le couvercle peut être détachable ou séparable.

Chaque boîte 3 réutilisable est équipée de moyens de verrouillage destinés à maintenir verrouillée la position de fermeture du couvercle sur le contenant. Ces moyens de verrouillage sont du type électromécanique et sont actionnés par l'unité informatique 31.

L'unité informatique 31 embarquée est programmable et met en oeuvre des moyens de traitement électronique. Cette unité informatique 31 est intégrée dans la boîte 3. L'unité informatique 31 est conçue, par exemple, pour recevoir des données des capteurs 34, pour piloter l'écran externe 33, ou encore communiquer avec d'autres dispositifs à l'aides des moyens de communication 32.

Chaque boîte 3 comprend également un ou des actionneurs mécaniques permettant, en l'absence d'un verrouillage du couvercle en position de fermeture sur le contenant, d'autoriser le passage du couvercle de sa position de fermeture à sa position d'ouverture.

Tel que cela est détaillé par la suite, l'actionnement de l'un de ces actionneurs peut être capté par un détecteur d'ouverture 343 de la boîte 3.

Pour permettre à la boîte 3 d'opérer ses fonctions électroniques, chaque boîte 3 est pourvue d'un accumulateur électrique rechargeable.

Afin d'optimiser la charge de l'accumulateur électrique, l'unité informatique 31 de chaque boîte 3 est paramétrée pour adopter une configuration d'économie d'énergie ou une configuration d'utilisation.

En configuration d'économie d'énergie, l'unité informatique 31 désactive au moins une partie des fonctions électroniques de la boîte 3 pour économiser de l'énergie.

En configuration d'utilisation, au moins une partie des fonctions électroniques désactivées dans la configuration d'économie d'énergie sont réactivées.

Tel qu'expliqué précédemment, les moyens de communication 32 permettent à l'unité informatique 31 de communiquer avec le serveur distant 2.

Ces moyens de communication 32 permettent également d'autres types de communication, par exemple avec une unité informatique personnelle portable susceptible d'être utilisée par un utilisateur du système 1.

Une unité informatique personnelle portable peut correspondre à un ordiphone.

Les moyens de communication 32 correspondent par exemple à des modules électroniques de communication cellulaire, ou des modules électroniques de communication utilisant un réseau de télécommunication faiblement consommateur d'énergie, ou encore des réseaux de communication à courte et moyenne portée, tel que du Bluetooth (marque déposée).

Les moyens de communication 32 peuvent être configurés pour permettre aux unités informatiques 31 de plusieurs boîtes 3 de communiquer entre elles. Ceci permet par exemple d'éviter l'activation accidentelle de deux boîtes 3 alors qu'un seul colisage doit être réalisé.

Le serveur distant 2 correspond quant à lui, par exemple, à une plateforme informatique incluant des bases de données et ses propres moyens de communication permettant au serveur distant 2 d'établir une communication de données avec au moins avec l'unité informatique 31 de chaque boîtes 3 réutilisables par le biais des moyens de communication 32 des boîtes 3.

Le serveur distant 2 comprend des moyens de traitement électronique et peut être consulté et programmé à l'aide d'une interface homme-machine (correspondant par exemple à un ordinateur).

Tel que cela est détaillé par la suite, le serveur distant 2 permet la réception d'ordre de colisage OC qui consistent en une demande de réalisation d'un colis, c'est-à-dire une demande d'envoi à une adresse d'objets contenus et protégés dans un contenant. A partir d'un ordre de colisage OC, il peut être déterminé des données de colisage DC qui sont relatives au colisage qui doit être réalisé. Les données de colisage DC comprennent plusieurs éléments. Dans leur forme la plus simple, les données de colisage DC comprennent l'identification du ou des objets à envoyer OE, et l'adresse de destination AD du colis. Toutefois elles peuvent également comprendre l'identité de l'expéditeur IE, l'adresse de l'expéditeur AE, un délai de livraison DL, ...

En référence à la figure 1, trois boîtes 3 sont représentées stockées. Ces trois boîtes 3 sont chacune dans leur configuration d'économie d'énergie.

Ces trois boîtes 3 correspondent à un stocks S3 de boîtes 3 en configuration d'économie d'énergie.

Dans le cadre d'une opération de colisage pour laquelle un colis doit être préparé, l'une des boîtes 3 en configuration d'économie d'énergie doit être activée, puis être configurée. Ce procédé et les moyens ad hoc sont détaillés ci-après.

L'opérateur 40 de colisage destiné réaliser l'opération de colisage à l'aide des boîtes 3 doit sélectionner une des boîtes 3.

Sur la figure 1 la boîte 3 située à droite de l'opérateur 40 constitue une boîte sélectionnée CS.

Cette boîte sélectionnée CS a été extraite du stock S3 de boîtes 3.

Selon le principe de l'invention, pour chaque boîte 3 avec son unité informatique 31 dans une configuration d'économie d'énergie, l'unité informatique 31 est paramétrée pour détecter par son capteur 34, ou au moins l'un de ses capteurs 34, la réalisation d'une action prédéterminée sur la boîte 3.

Les capteurs 34 de chaque boîte 3 peuvent être :
- un accéléromètre 342 ;
- un détecteur d'ouverture 343 ;
- un capteur de poids 344.

Un accéléromètre 342 peut être utilisé pour détecter un déplacement de la boîte 3. Par exemple, l'action prédéterminée destinée à permettre le réveil de la boîte 3 peut correspondre au fait de secouer physiquement la boîte 3.

Un accéléromètre peut également permettre de détecter un mouvement précis de la boîte 3, par exemple une rotation spécifique de la boîte 3.

Le détecteur d'ouverture 343 peut, quant à lui, faire correspondre l'action prédéterminée sur la boîte 3 à une ouverture du couvercle provoquant l'arrêt d'un contacteur, ou la détection de lumière à l'intérieur de la boîte 3.

Le détecteur d'ouverture 343 peut également correspondre à l'actionnement d'un actionneur destiné à permettre le déverrouillage de l'ouvrant sur le contenant.

Enfin, le capteur de poids 344 peut être intégré à l'intérieur de la boîte 3, au niveau du fond de la boîte 3, pour permettre de détecter dès qu'un objet est déposé à l'intérieur de la boîte 3.

Selon le présent mode de réalisation, le système 1 comprend également des moyens d'identification 4 d'un opérateur 40 de colisage par une unité informatique 31 d'une boîte 3.

Ci-après sont présentés différents modes de réalisation des moyens d'identification 4, ces différents modes de réalisation étant tous intégrés sur la figure 1 et dans la description ci-après. Toutefois, il doit être considéré que ces différents modes de réalisation des moyens d'identification 4 peuvent être uniquement intégrés séparément ou en combinaison avec un ou plusieurs des autres modes de réalisation des moyens d'identification 4.

Par exemple, les moyens d'identification 4 comportent un élément d'identification 41 distinct des boîtes 3 et destiné à être porté par un opérateur 40.

Pour chaque boîte 3, le ou l'un des capteurs 34 est alors conçu pour détecter l'élément d'identification 41.

Par exemple, un élément d'identification 41 du type bracelet 411 peut être porté par l'opérateur 40.

Un tel bracelet 411 peut intégrer une puce électronique de communication par champ proche. Cette puce électronique intègre l'identifiant du bracelet, ou de l'opérateur 40 et est destinée à communiquer cet identifiant au capteur 34 ad hoc de la boîte sélectionnée CS. Un autre type d'élément d'identification similaire peut par exemple être un collier ou encore un badge.

Selon un autre exemple, un élément d'identification 41 peut correspondre à une carte électronique 42 mettant en oeuvre un protocole de communication par champ proche (NFC) ou une antenne de radio-identification de type RFID, la carte électronique 42 étant destinée à être posée sur un lecteur NFC ou RFID présenté par la boîte 3.

Chaque boîte 3 peut également comporter un capteur biométrique 341 mis en oeuvre par les moyens d'identification 4.

Un capteur biométrique 341 peut par exemple correspondre à un système permettant de reconnaître une empreinte digitale, un schéma rétinien, ou encore la voix d'un opérateur 40.

Il peut être également associé à l'authentification par la voix, la reconnaissance d'une commande vocale spécifique. L'opérateur doit alors activer la boîte en disant, par exemple, « activation ».

Les moyens d'identification 4 présentés précédemment sont au moins en partie du type « sans fil » et sont paramétrés pour établir une identification d'un opérateur 40 à proximité immédiate d'une des boîtes 3.

Ces différents modes de réalisation des moyens 4 d'identification permettent d'identifier spécifiquement l'opérateur 40.

Il peut être toutefois considéré que ces moyens d'identification 4 ne permettent que de reconnaître l'identifiant de l'élément d'identification 41 utilisé (par exemple le numéro d'un badge attribué à une catégorie d'opérateurs 40).

Suite à la détection d'une action prédéterminée sur la boîte 3, l'unité informatique 31 est paramétrée pour déclencher une routine d'activation.

L'unité informatique 31 peut être paramétrée pour ne pas déclencher la routine d'activation en présence de l'action prédéterminée sur la boîte 3 si les moyens d'identification 4 d'un opérateur 40 ne permettent pas de valider l'identification.

Cette routine d'activation comprend notamment :
- une étape de passage de l'unité informatique 31 de sa configuration d'économie d'énergie à sa configuration d'utilisation ;
- une étape de téléchargement par l'unité informatique 3, de données de colisage DC, dont au moins l'adresse de destination AD de la boîte 3, depuis le serveur distant 2, jusqu'à l'unité informatique 3, par le biais des moyens de communication 32 ;
- une étape d'affichage sur l'écran externe 33 d'au moins une partie des données de colisage DC.

Selon le présent mode de réalisation, la routine d'activation comprend, après l'étape de passage de l'unité informatique 31 à sa configuration d'utilisation, une étape d'information du serveur distant 2 du passage de l'unité informatique 31 à sa configuration d'utilisation, et de stockage de cette information par le serveur distant 2.

Cette étape d'information peut être répétée au fur et à mesure du colisage pour d'autres événements relatifs à la boîte de l'unité informatique en configuration d'utilisation. En conséquence, le serveur distant 2 peut être informé successivement, de l'identification de l'opérateur, du remplissage de la boîte 3, de la fermeture de la boîte 3, etc..

Suite à l'étape de passage de l'unité informatique 31 de sa configuration d'économie d'énergie à sa configuration d'utilisation, l'unité informatique 31 peut être paramétrée pour réaliser une ou plusieurs actions. Par exemple l'unité informatique 31 peut télécharger une mise à jour de son logiciel, réaliser une ou des mesures avec des capteurs embarqués sur la boîte 3, réaliser une géolocalisation de la boîte 3, etc..

Dès qu'une boîte 3 a été activée et a téléchargé les données de colisage DC, elle peut émettre une notification par le biais de l'organe d'avertissement 35.

L'organe d'avertissement 35 peut correspondre à un avertisseur sonore ou lumineux, ou bien encore être formé par l'écran externe 33, la notification correspondant alors à l'affichage d'une information sur l'écran externe 33. Par exemple, l'adresse de destination AD de la boîte 3 peut s'afficher sur l'écran externe 33.

Le serveur distant 2 est paramétré pour attribuer à un opérateur 40 un colisage à réaliser, ce colisage étant associé à des données de colisage DC.

En conséquence, pour un colisage particulier à réaliser, un opérateur 40 est désigné.

De cette manière, la routine d'activation comprend également une étape d'identification, par les moyens d'identification 4, de l'opérateur 40 réalisant une action prédéterminée sur la boîte 3. Dans ce cas, l'étape de téléchargement des données de colisage DC consiste à télécharger des données de colisage DC du colisage attribué à l'opérateur 40.

Le système 1, selon le mode de réalisation de la figure 1, comprend également des moyens d'information 5 destinés à informer les opérateurs 40 qu'un colis doit être envoyé.

Le serveur distant 2 est alors paramétré pour envoyer une consigne de préparation CP d'un colis à un opérateur 40 par le biais des moyens d'information 5, lors de la réception des données de colisage DC.

Ces moyens d'information 5 peuvent, par exemple, prendre la forme d'un dispositif comportant un avertisseur visuel 51, tel qu'une lumière, et des moyens de communication longue distance 52 avec le serveur distant 2.

De cette manière des opérateurs 40 sont avertis dès qu'un colisage doit être réalisé.

Les moyens d'information 5 peuvent également prendre la forme d'un écran sur lequel est affichée l'information qu'un colis doit être envoyé.

Une telle information peut également intégrer le nom ou le matricule d'un opérateur 40 particulier, ainsi que l'identification du ou des objets à envoyer OE (nature et nombre d'objets).

De cette manière, l'opérateur 40 doit simplement saisir l'objet à envoyer et saisir l'une des boîtes 3 du stock S3, puis réaliser l'action prédéterminée pour lancer la routine d'activation.

Selon le présent mode de réalisation, le serveur distant 2 comprend des moyens de réception 21 d'ordre de colisage OC.

Le serveur distant 2 est paramétré pour préparer, pour leur téléchargement, les données de colisage DC relatives à chaque ordre de colisage OC.

Par exemple, le serveur distant 2 peut être conçu pour fournir des accès à des vendeurs en ligne et leur permettre, dès qu'une vente est conclue, de passer un ordre de colisage OC pour l'envoi d'un objet stocké dans un entrepôt dédié au stockage et à l'envoi de ces objets.

Le serveur distant 2, recevant alors un ordre de colisage OC, définit les données de colisage DC depuis l'ordre de colisage OC et formate par exemple l'adresse de destination AD de la boîte 3 pour que, dès que l'unité informatique 31 de la boîte sélectionnée CS demande le téléchargement de ces données, l'adresse de destination AD de la boîte 3 puisse être affichée sur l'écran externe 33 de la boîte 3 activée.

Un procédé de colisage mis en oeuvre par le système 1 définit précédemment est décrit ci-après.

Le procédé de colisage comprend :
- une étape de sélection par un opérateur d'une boîte 3 parmi une pluralité de boîtes 3 dont l'unité informatique 31 adopte sa configuration d'économie d'énergie ;
- une étape de réalisation d'une action prédéterminée sur la boîte 3 sélectionnée ;
- une étape de détection par l'unité informatique 31 de l'action prédéterminée captée par le ou les capteurs 34 de la boîte 3 ;
- une étape de déclenchement d'une routine d'activation par l'unité informatique 31 de la boîte 3 sélectionnée.

La routine d'activation comprend quant à elle :
- une étape de passage de l'unité informatique 31 de sa configuration d'économie d'énergie à sa configuration d'utilisation ;
- une étape de téléchargement par l'unité informatique 31, des données de colisage DC, dont au moins une adresse de destination AD de la boîte 3, depuis le serveur distant 2, jusqu'à l'unité informatique 31 de la boîte 3 faisant l'objet de l'action prédéterminée ;
- une étape d'affichage sur l'écran externe 33 d'au moins une partie des données de colisage DC.

Selon le présent mode de réalisation, et tel qu'évoqué précédemment pour le système 1, la routine d'activation comprend, après l'étape de passage de l'unité informatique 31 à sa configuration d'utilisation, une étape d'information du serveur distant 2 du passage de l'unité informatique 31 à sa configuration d'utilisation, et de stockage de cette information par le serveur distant 2.

Cette étape d'information est répétée plusieurs fois à chaque événements notables intervenant sur la boîte 3 et qui est capté par l'unité informatique 31 de la boîte 3. En conséquence, l'étape d'information peut permettre l'information du serveur distant 2 et le stockage par le serveur distant 2 de l'identification de l'opérateur, du remplissage de la boîte 3, de la fermeture de la boîte 3, etc..

Selon le présent mode de réalisation, entre l'étape de passage de l'unité informatique de sa configuration d'économie d'énergie à sa configuration d'utilisation, et l'étape de téléchargement, la routine d'activation intègre également une étape d'identification de l'opérateur 40.

Cette étape d'identification permet d'autoriser la poursuite de la routine d'activation.

L'étape d'identification peut également permettre de savoir quelles données de colisage doivent être téléchargées dans le cas où une pluralité de colisage doivent être réalisés simultanément. Dans ce cas, l'identité de l'opérateur 40 est envoyée au serveur distant pour confirmation.

L'étape d'identification peut encore être répétée plusieurs fois jusqu'à la fin du colisage pour s'assurer que l'opérateur 40 identifié a bien terminé le colisage.

En cas de non identification de l'opérateur 40, soit la routine d'activation est directement arrêtée, et l'unité informatique 31 passe de nouveau dans sa configuration d'économie d'énergie, soit l'étape d'identification est réalisée de nouveau selon un nombre prédéterminé de fois avant que l'unité informatique 31 repasse dans sa configuration d'économie d'énergie.

Grâce à la ou l'une des étapes d'information du serveur distant 2, le serveur distant 2 est informé de la ou des non identifications.

Le cas échéant s'il s'agit d'une opération frauduleuse, des alertes sont envoyées au serveur distant 2, et des informations sont affichées sur l'écran externe 33 de la boite 3 pour dissuader l'opération. Une alerte sonore peut également être déclenchée par le biais d'un hautparleur porté par la boîte 3, et un verrouillage du couvercle dans sa position par rapport au contenant peut être réalisé.

Dans le cas où il n'y a pas d'identification de l'opérateur 40, ou que l'étape d'identification n'est pas destinée à permettre de savoir quelles données de colisage doivent être téléchargées, alors le système peut être conçu pour que les données de colisage les plus anciennes soient téléchargées.

Dans cette situation, l'opérateur 40 peut être informé de l'identification du ou des objets à envoyer OE (nature des objets et nombre d'objets qu'il doit mettre dans la boîte 3), par le biais de l'affichage de ces informations sur un écran du système, par exemple sur l'écran externe 33 de la boîte 3.

Il est également envisagé que, dans le cadre un système de stockage et de déstockage automatisé, l'identification du ou des objets à envoyer OE soit envoyée à un automate conçu pour extraire le ou les objets à envoyer OE d'un rayonnage et à les envoyer à un poste d'un opérateur où une boîte 3 a été activée. L'opérateur 40 n'a alors plus qu'à charger le ou les objets à envoyer dans la boîte 3.

L'étape de téléchargement des données de colisage DC implique l'envoi d'une information d'activation de l'unité informatique 31, par le biais des moyens de communication 32 au serveur distant 2. Cette information d'activation comprend des moyens d'authentification de la boîte 3 tel qu'un numéro de série unique. A la réception de cette information d'activation, le serveur distant 2 envoie les données de colisage DC à l'unité informatique 31 de la boîte 3 qui les télécharge.

## Revendications

1. Système (1) de colisage comprenant un serveur distant (2), et une pluralité de boîtes (3) réutilisables, chaque boîte (3) comprenant :
- une unité informatique (31) embarquée paramétrée pour adopter une configuration d'économie d'énergie, ou une configuration d'utilisation ;
- des moyens de communication (32) aptes à communiquer avec le serveur distant (2) ;
- un écran externe (33) positionné sur une face externe de la boîte (3) ;
- au moins un capteur (34) ;
**caractérisé en ce que,** pour chaque boîte (3) avec l'unité informatique (31) dans une configuration d'économie d'énergie, l'unité informatique (31) est paramétrée pour détecter par ledit ou lesdits capteurs (34) de la boîte (3) la réalisation par un opérateur (40) de colisage, situé à proximité immédiate de la boîte (3), d'une action prédéterminée sur la boîte (3), puis déclencher une routine d'activation comprenant :
- une étape de passage de l'unité informatique (31) de sa configuration d'économie d'énergie à sa configuration d'utilisation ;
- une étape de téléchargement par l'unité informatique (31), des données de colisage (DC), dont au moins une adresse de destination (AD) de la boîte, depuis le serveur distant (2), jusqu'à l'unité informatique (3), par le biais des moyens de communication (32) ;
- une étape d'affichage sur l'écran externe (33) d'au moins une partie des données de colisage (DC).

2. Système (1) selon la revendication précédente, **caractérisé en ce qu'**il comprend des moyens d'identification (4) de l'opérateur (40) par une unité informatique (31) d'une boîte (3).

3. Système (1) selon la revendication précédente, **caractérisé en ce que** les moyens d'identification (4) comportent un élément d'identification (41) distinct des boîtes (3) et destiné à être porté par l'opérateur (40), chaque boîte (3) comportant un capteur (34) conçu pour détecter l'élément d'identification (41).

4. Système (1) selon l'une quelconque des revendications 2 et 3, **caractérisé en ce que** les moyens d'identification (4) comportent, pour chaque boîte (3), un capteur biométrique (341).

5. Système (1) selon l'une quelconque des revendications 2 à 4, **caractérisé en ce que** les moyens d'identification (4) sont du type « sans-fil » et sont paramétrés pour établir une identification de l'opérateur (40) à proximité immédiate d'une des boîtes (3).

6. Système (1) selon l'une quelconque des revendications 2 à 5, **caractérisée en ce que** le serveur distant (2) est paramétré pour attribuer à un opérateur (40) un colisage associé à des données de colisage (DC),
et **en ce que** la routine d'activation comprend également une étape d'identification, par les moyens d'identification (4), de l'opérateur (40) réalisant une action prédéterminée sur la boîte (3), l'étape de téléchargement des données de colisage (DC) consistant à télécharger les données de colisage (DC) relatives au colisage attribué à l'opérateur (40).

7. Système (1) selon l'une quelconque des revendications précédentes, **caractérisé en ce que**, pour chaque boîte (3), le ou au moins une partie des capteurs (34) sont sélectionnés parmi :
- un accéléromètre (342) ;
- un détecteur d'ouverture (343) ;
- un capteur de poids (344) ;
- un moyen d'identification de l'opérateur à proximité immédiate la boîte, tel que une puce NFC, une puce RFID, un capteur biométrique.

8. Système (1) selon l'une quelconque des revendications précédentes, **caractérisé en ce qu'**il comprend des moyens d'information (5) d'opérateurs (40) de colisage destinés à informer les opérateurs (40) qu'un colis doit être envoyé,
et **en ce que** le serveur distant (2) est paramétré pour envoyer une consigne de préparation (CP) d'un colis à l'opérateur (40) par le biais des moyens d'information (5), lors de la réception de données de colisage (DC).

9. Système (1) selon l'une quelconque des revendications précédentes, **caractérisé en ce que** le serveur distant (2) comprend des moyens de réception (21) d'ordres de colisage (OC), et est paramétré pour préparer pour leur téléchargement des données colisage (DC) relative à chaque ordre de colisage (OC).

10. Procédé de colisage comprenant :
- une pluralité de boîtes (3) réutilisables comprenant chacune un écran externe (33), des capteurs (33), et une unité informatique (31) embarquée paramétrée pour adopter une configuration d'économie d'énergie, ou une configuration d'utilisation ;
- une étape de sélection, d'une boîte (3) parmi une pluralité de boîtes dont les unités informatiques (31) adoptent la configuration d'économie d'énergie, par un opérateur (40) de colisage situé à proximité immédiate de la boîte (3);
- une étape de réalisation par l'opérateur (40), situé à proximité immédiate de la boîte (3), d'une action prédéterminée sur la boîte sélectionnée (CS) ;
- une étape de détection par l'unité informatique (31) de l'action prédéterminée captée par le ou les capteurs (33) de la boîte sélectionnée (CS) ;
- une étape de déclenchement d'une routine d'activation par l'unité informatique (31) de la boîte sélectionnée (CS), la routine d'activation comprenant :
- une étape de passage de l'unité informatique (31) de sa configuration d'économie d'énergie à sa configuration d'utilisation ;
- une étape de téléchargement par l'unité informatique (31) des données de colisage (DC), dont au moins une adresse de destination (AD) de la boîte (3), depuis un serveur distant (2), jusqu'à l'unité informatique (31) ;
- une étape d'affichage sur l'écran externe (33) d'au moins une partie des données de colisage (DC).
